# EUROPEAN PATENT SPECIFICATION

(11) **EP 1 813 477 B1**
(45) Date of publication and mention of the grant of the patent: **20.04.2011**
(21) Application number: 05805214.3
(22) Date of filing: 28.10.2005
(51) Int. Cl.: B60R 11/02, B60R 1/00, B60R 16/02, G08G 1/16, G09G 5/00, G09G 5/377, H04N 7/18, B60R 11/04, G08G 1/00, G06T 7/20, G06T 7/40, H04N 5/00, B60R 11/00

(54) **ENTERTAINMENT SYSTEM**
UNTERHALTUNGSSYSTEM
SYSTÈME DE DIVERTISSEMENT

(30) Priority: 29.10.2004 JP 2004316462
(43) Date of publication of application: 01.08.2007
(73) Proprietor: Panasonic Corporation, Kadoma-shi Osaka 571-8501 (JP)
(72) Inventor: MORI, Toshiaki c/o Matsushita Electric Industrial Co., Ltd, Chuo-ku, Osaka-shi, Osaka 540-8319 (JP); MIZUGUCHI, Yuji c/o Matsushita Electric Industrial Co., Ltd.,, Chuo-ku, Osaka-shi, Osaka 540-6319 (JP)
(74) Representative: Pautex Schneider, Nicole Véronique
(86) International application number: PCT/JP2005/019929
(87) International publication number: WO 2006/046715

(56) References cited:
- EP-A- 1 065 642
- JP-A- 2 147 446
- JP-A- 10 116 086
- JP-A- 2002 277 258
- JP-A- 2003 154 900
- JP-A- 2004 289 738
- JP-A- 2005 294 954
- JP-B2- 3 288 370

## Description

### Technical Field

The present invention relates to an entertainment system and, more particularly, an entertainment system for providing contents to a viewer in a moving body.

### Background Art

The entertainment system is installed into the vehicle as an example of the moving body to provide entertainment information of contents typified by movies, news, or television to a passenger (viewer) in the vehicle through a monitor fitted around a front seat or a rear seat, for example. However, according to such providing system, when the vehicle turns or reduces speed, the viewer cannot know a behavior of vehicle in advance, so that such viewer cannot assume a posture of safety. As a result, there was the problem that the entertainment system is likely to cause motion sickness in the viewer.

In order to overcome this problem, the entertainment system aiming at preventing occurrence of motion sickness (referred to as the "conventional entertainment system" hereinafter) has been provided (see JP-A-2003-154900, for example). That is, this entertainment system informs the passenger of a behavior of vehicle to prevent motion sickness in such a manner that the turning or deceleration of the vehicle is output in a voice or displayed on a monitor based on operation information sensed from a steering wheel, a brake or a winker, the landscape image in the traveling direction captured by an onboard camera is displayed on a rear seat monitor, or the like.

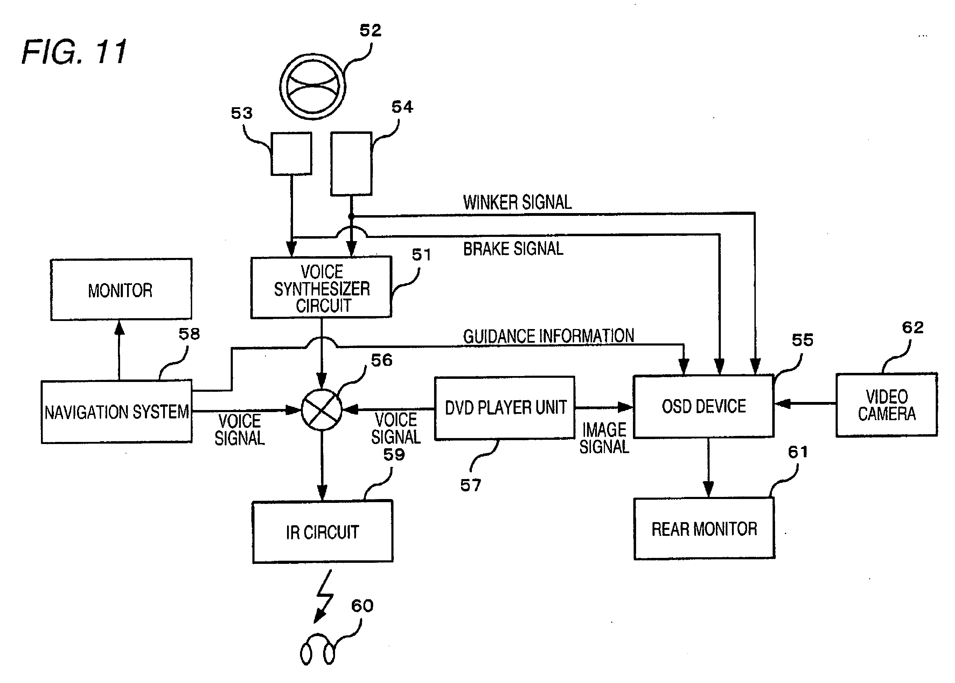

Here, F1G.11 is a block diagram showing a configuration of an entertainment system in the prior art. In FIG.11, the conventional entertainment system includes a voice synthesizer circuit 51 for offering an operation state in a voice by receiving operation information from a steering wheel 52, a brake 53, and a winker 54, an OSD device 55 for offering the operation state on video, a video camera 62 for picking up an image of a landscape in the traveling direction, a DVD player unit 57, a rear monitor 61, a navigation system 58 for assisting driving of vehicle, a mixer 56 for synthesizing a voice output of the voice synthesizer circuit 51, a voice signal of the DVD player unit 57, and a voice signal of the navigation system 58, an IR circuit 59 for converting a synthesized voice signal into an infrared signal, and a headphone 60 for converting the infrared signal from the IR circuit 59 into a sound.

EP1065642 A2 discloses a vehicle drive assist system comprising a camera for picking up an image of an area existing in an advancing direction of a vehicle; display means for displaying the image picked up by the camera; steering angle detecting means for detecting a steering angle for steering the vehicle; travelling path predicting means for predicting a travelling path of the vehicle on the basis of the steering angle detected by the steering angle detecting means; and drive assist means for overlaying on the display means drive assist information containing the vehicle predictive travelling path predicted by the travelling path predicting means and guide lines prolonged from the lines defining the width of the vehicle body on the image of the area existing in the vehicle advancing direction.

### Disclosure of the Invention

### Problems that the Invention is to Solve

However, according to the conventional entertainment system, for example, when the vehicle goes around a curve on which an operation of the winker 54 is not needed, that effect is not output to the headphone 60 in a voice, nothing is displayed on the rear monitor 61, and properly speaking the landscape image in the traveling direction is not displayed on the rear monitor 61. Therefore, when the vehicle turns a curve or when the vehicle shows a change of behavior to some extent, it is impossible for the passenger to know in advance occurrence of such behavior. As a result, the conventional entertainment system has such a problem that neither the passenger can assume a posture of safety beforehand nor the occurrence of motion sickness can be sufficiently prevented.

Therefore, it is an object of the present invention to provide an entertainment system capable of permitting a viewer in a moving body to assume a posture of safety in no time.

### Means for Solving the Problems

In order to attain the above object, an entertainment system of the present invention according to claim 1 includes a capturing portion for generating a landscape image by capturing a landscape on a traveling direction of a vehicle; a contents information outputting portion for outputting contents information containing image information; a position-in-a-traveling- direction sensing portion for sensing a position on the traveling direction of the vehicle based on the landscape image generated by the capturing portion; a first composite image generating portion for generating a contents image from the contents information output by the contents information outputting portion, and generating a composite image by combining the contents image with the landscape image so that the contents image is arranged on surroundings of the sensed position in the landscape image; and a displaying portion for displaying the composite image generated by the first composite image generating portion.

In the entertainment system, the first composite image generating portion generates the composite image by combining the contents image with an intermediate image so that the sensed position is not covered with the contents image in the intermediate image.

In the entertainment system, the first composite image generating portion generates an intermediate image in which a figure information representing a predetermined shape is combined in a position sensed by the position-in-the-traveling- direction sensing portion in the landscape image generated by the capturing portion, and generates the composite image by combining the contents image with the intermediate image so that the contents image is arranged on surroundings of the figure information in the intermediate image.

The entertainment system of the present invention further includes a white-line sensing portion for sensing white lines depicted on a road surface based on the landscape image generated by the capturing portion; wherein the position-in-the- traveling-direction sensing portion senses a vanishing point which indicates an intersection of the white lines sensed by the white-line sensing portion as the position on the traveling direction of the vehicle.

The entertainment system of the present invention further includes an operation information outputting portion for outputting operation information indicating a turning direction of the vehicle; and a second composite image generating portion for generating an intermediate image in which position information indicating the position sensed by the position-in-the-traveling-direction sensing portion is combined with the landscape image generated by the capturing portion and a contents image from the contents information being output from the contents information outputting portion in the landscape image generated by the capturing portion when the operation information is given by the operation information outputting portion, and generates the composite image in which the contents image is combined with the intermediate image so that the contents image is arranged in a position on an opposite side to the turning direction of the vehicle indicated by the operation information and on surroundings of the position information in the intermediate image; wherein the displaying portion displays the composite image generated by the second composite image generating portion.

The entertainment system of the present invention further includes a position deciding portion for deciding whether the position sensed by the position-in-the-traveling-direction sensing portion is below or over a predetermined height from a base of the composite image displayed on the displaying portion; an excluding portion for excluding an upper portion of the landscape image captured by the capturing portion by an amount by which the position displayed in a display image on the displaying portion is shifted to the predetermined height or more when it is decided by the position deciding portion that the position is below the predetermined height; and a third composite image generating portion for generating an intermediate image in which position information indicating the position sensed by the position-in-the-traveling- direction sensing portion is combined with a remaining landscape image not to be excluded by the excluding portion and a contents image from contents information being output by the contents information outputting portion, and generating a composite image by combining the intermediate image with the contents image so that the contents image is arranged on surroundings of the position information in the intermediate image; wherein the displaying portion displays the composite image generated by the third composite image generating portion.

The entertainment system of the present invention further includes a driving portion for changing the capturing direction of the capturing portion; a position deciding portion for deciding whether the position sensed by the position-in-the-traveling-direction sensing portion is below or over a predetermined height from a base of the composite image displayed on the displaying portion; and a control information outputting portion for outputting control information, which causes the position displayed in a display image on the displaying portion to shift to the predetermined height or more, to the driving portion when it is decided by the position deciding portion that the position is below the predetermined height; wherein the driving portion changes the capturing direction of the capturing portion based on the control information being output by the control information outputting portion.

Also, a second aspect of the present invention aims at an entertainment providing method. This entertainment providing method according to claim 7 includes among further method steps the steps of generating a landscape image by capturing a landscape on a traveling direction of a vehicle; outputting contents information containing image information; sensing a position on the traveling direction of the vehicle based on the captured landscape image; generating a contents image from the output contents information, and generating a composite image by combining the contents image with the landscape image so that the contents image is arranged on surroundings of the sensed position in the landscape image; and displaying the composite image.

### Advantages of the Invention

According to the present invention, the image composing portion 14 synthesizes the contents image and the landscape image so that the position on the traveling direction of the vehicle in the landscape image is not covered with the contents image. Therefore, even when the winker is not used, it is possible for the fellow passenger to foresee the turning of the vehicle, so that the viewer can assume a posture of safety in advance and the occurrence of motion sickness in the viewer can be prevented.

Above and other objects, features, aspects and advantages of the present invention will become clearer when the detailed explanation of the present invention described hereinafter is understood along with the accompanying drawings.

### Brief Description of the Drawings

[FIG.1] FIG.1 is a block diagram showing a configuration of an entertainment system 600 according to an embodiment of the present invention.
[FIG.2] FIG.2 is a schematic view illustrating an image 100 captured by a capturing portion 12 shown in FIG.1.
[FIG.3] FIG.3(a) is a schematic view illustrating an edge image that a spatial high-frequency signal generated by a white-line sensing portion 16 shown in FIG.1 represents, and FIG.3(b) is a schematic view illustrating an extracted edge image 120 generated by the white-line sensing portion 16 shown in FIG.1.
[FIG.4] FIG.4(a) is a schematic view illustrating a road image 130 generated by the white-line sensing portion 16 shown in FIG.1, and FIG.4(b) is a schematic view illustrating an area image 140 generated by the white-line sensing portion 16 shown in FIG.1.
[FIG.5] FIG.5 is a flowchart showing process procedures required until the image is displayed in the entertainment system 600 shown in FIG.1.
[FIG.6] FIG.6(a) is a schematic view illustrating a landscape captured by the capturing portion 12 shown in FIG.1, FIG.6(b) is a schematic view explaining a process in step S150 shown in FIG.5, FIG.6(c) is a schematic view explaining a process in step 160, and FIG.6(d) is a schematic view explaining a process in step 170.
[FIG.7] FIGS.7(a) to (c) are schematic views explaining a process in step S180 shown in FIG.5.
[FIG.8] FIG.8 is a schematic view explaining a process of an image composing portion 14 shown in FIG.1.
[FIG.9] FIG.9 is a flowchart showing operation procedures applied in controlling the capturing direction of the capturing portion 12 in the entertainment system 600 shown in FIG.1.
[FIG.10] FIG.10(a) is a schematic view illustrating a landscape image 510 that the capturing portion 12 generates before the capturing direction is changed, FIG.10(b) is a schematic view explaining a landscape image 520 that the capturing portion 12 generates after the capturing direction is changed, FIG.10(c) is a schematic view explaining a contents image 540, and FIG.10(d) is a schematic view explaining a composite image 550.
[FIG.11] FIG. 11 is a block diagram showing a configuration of an entertainment system in the prior art.

### Description of Reference Numerals

- 11: video contents playing portion
- 12: capturing portion
- 13: winker portion
- 14: image composing portion
- 15: displaying portion
- 16: white-line sensing portion
- 17: position-in-the-traveling-direction sensing portion
- 18: capturing direction controlling portion
- 19: driving portion
- 600: entertainment system

### Best Mode for Carrying Out the Invention

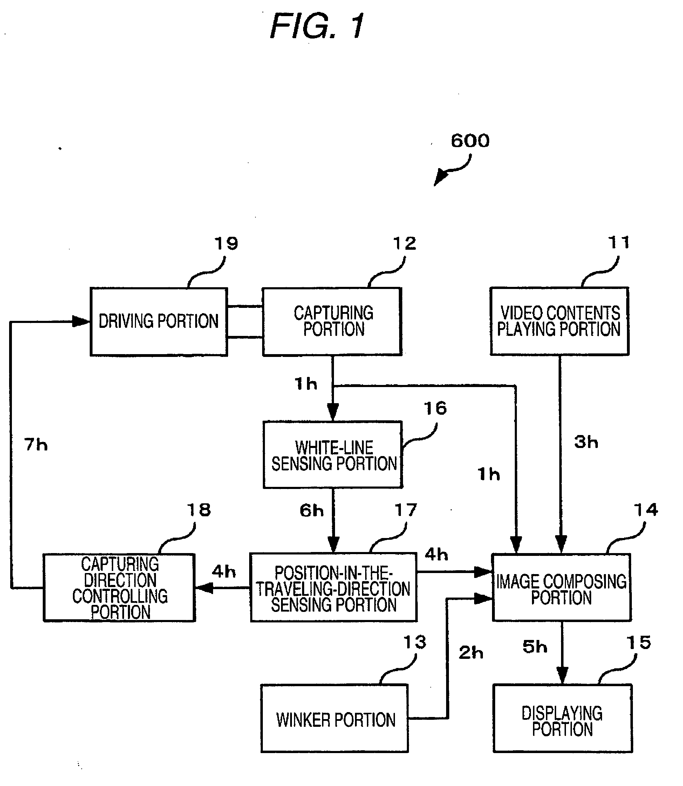

An embodiment of the present invention will be explained with reference to the drawings hereinafter. FIG.1 is a block diagram showing a configuration of an entertainment system 600 according to an embodiment of the present invention.

In FIG.1, an entertainment system 600 is installed into the vehicle as an example of a moving body, and includes a video contents playing portion 11, a capturing portion 12, a winker portion 13, an image composing portion 14, a displaying portion 15, a white-line sensing portion 16, a position-in-the-traveling-direction sensing portion 17, a capturing direction controlling portion 18, and a driving portion 19.

The video contents playing portion 11 plays video contents information stored in a CD-ROM or a DVD-ROM that is put into a CD-ROM drive or a DVD-ROM drive. Also, the video contents playing portion 11 plays video contents information such as a television broadcast, or the like received via a communication line. The video contents playing portion 11 1 constitutes a contents information outputting portion that outputs contents information containing image information.

The capturing portion 12 is a camera with a lens and CCD, and is fitted typically to a front portion or a top portion of the vehicle. The capturing portion 12 outputs a video signal 1h that picks up an image of a landscape in the traveling direction of the vehicle.

The winker portion 13 outputs an operation signal 2h when the vehicle turns right or left. The winker portion 13 constitutes an operation information outputting portion that outputs operation information indicating the turning direction of the vehicle. In this case, such operation information outputting portion may be constructed not only by the winker portion 13 but also other mechanical constituent portion that is operated together with the operation of the vehicle. Also, in the present embodiment, the winker portion 13 is explained as a constituent portion of the entertainment system 600. But normally the winker portion 13 is a constituent portion of the vehicle. That is, the winker portion 13 is not an essential constituent portion of the entertainment system 600.

The image composing portion 14 receives the video signal 1 h given from the capturing portion 12, the operation signal 2h given from the winker portion 13, contents information 3h given from the video contents playing portion 11, and vanishing-point position information 4h given from the position-in-the- traveling-direction sensing portion 17 to indicate a position of a vanishing point (details will be described later). The image composing portion 14 generates and outputs a composite image signal 5h representing the image given hereunder by using the necessary information among them. The image composing portion 14 acts as any one of a first image composing portion, a second image composing portion, and a third image composing portion in response to the composite image generating method.

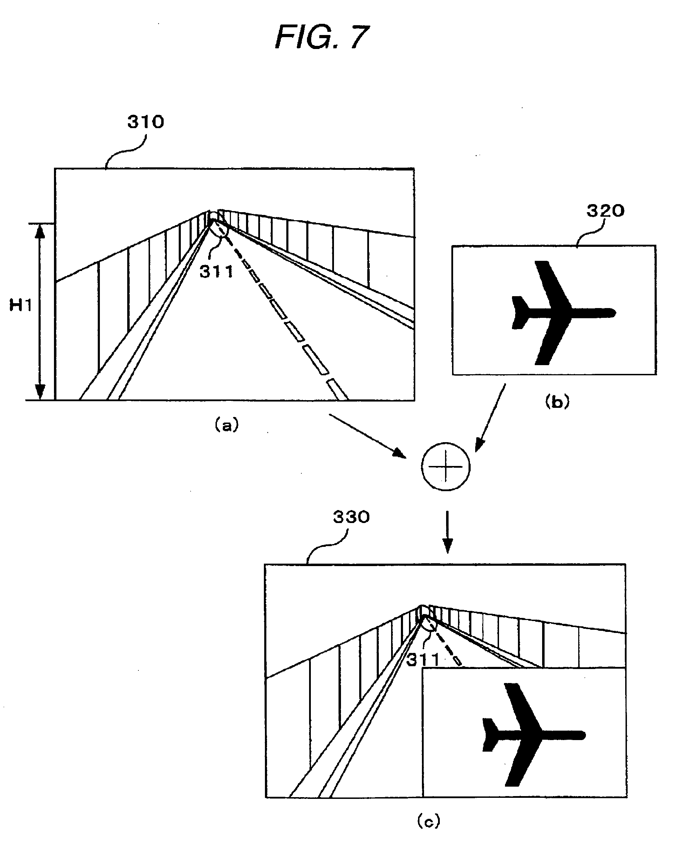

(1) Image signal 5h based upon the contents information 3h when the landscape image captured by the capturing portion 12 is not displayed
(2) Image signal 5h based upon the video signal 1h captured by the capturing portion 12 when the contents information 3h is not displayed
(3) Image signal 5h showing the image in which the contents image is combined with the landscape image, which the video signal 1h represents, not to cover a position of the vanishing point and its peripheral area, as shown in FIG.7

The TFT color liquid crystal monitor, for example, is used as the displaying portion 15. The displaying portion 15 displays the video based on the image signal 5h input from the image composing portion 14.

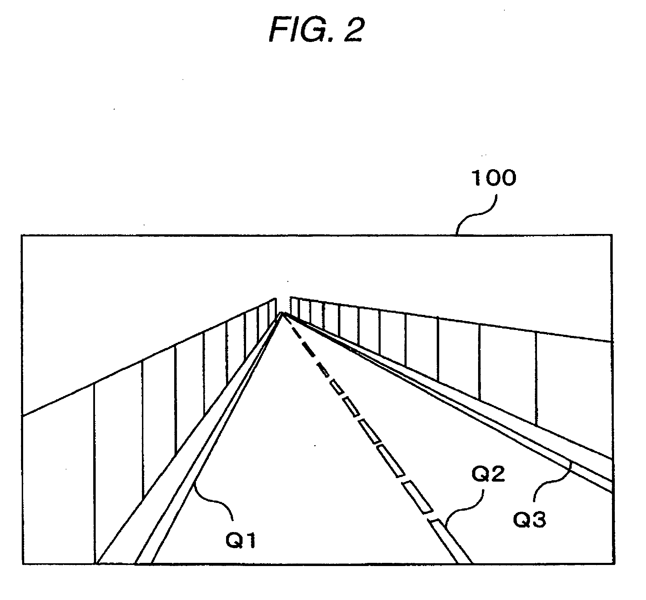

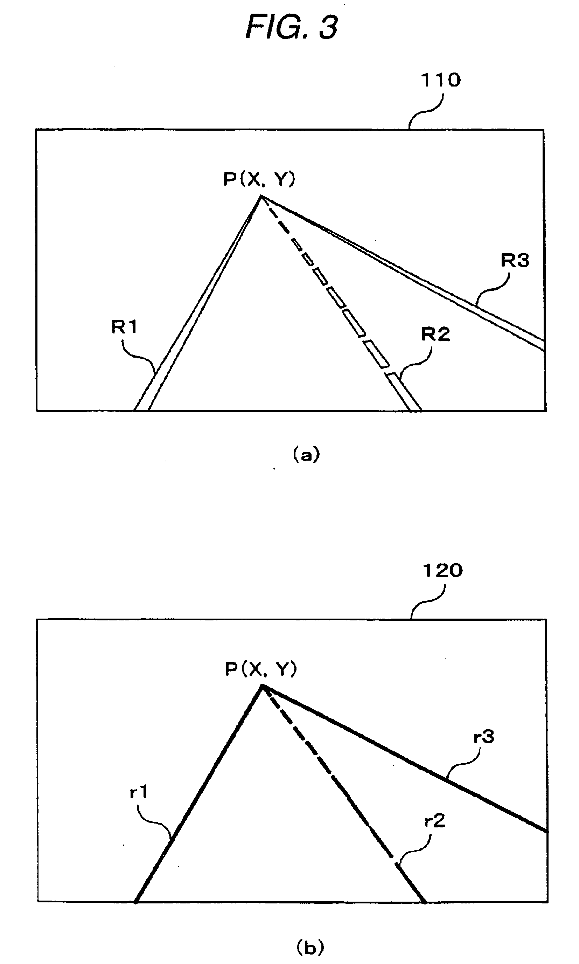

The white-line sensing portion 16 extracts a high- frequency component from the video signal 1h representing an image 100 (see FIG.2) captured by the capturing portion 12, and generates a spatial high-frequency signal representing an edge image 110 containing lanes R1, R2, and R3, as shown in FIG.3(a). Also, the white-line sensing portion 16 scans the edge image 110 based on a threshold value that is applied to extract effectively profile portions of the lanes R1, R2, and R3, and generates an extracted edge image 120 containing edges r1, r2, and r3 that are derived by thinning the lanes R1, R2, and R3, as shown in FIG.3(b).

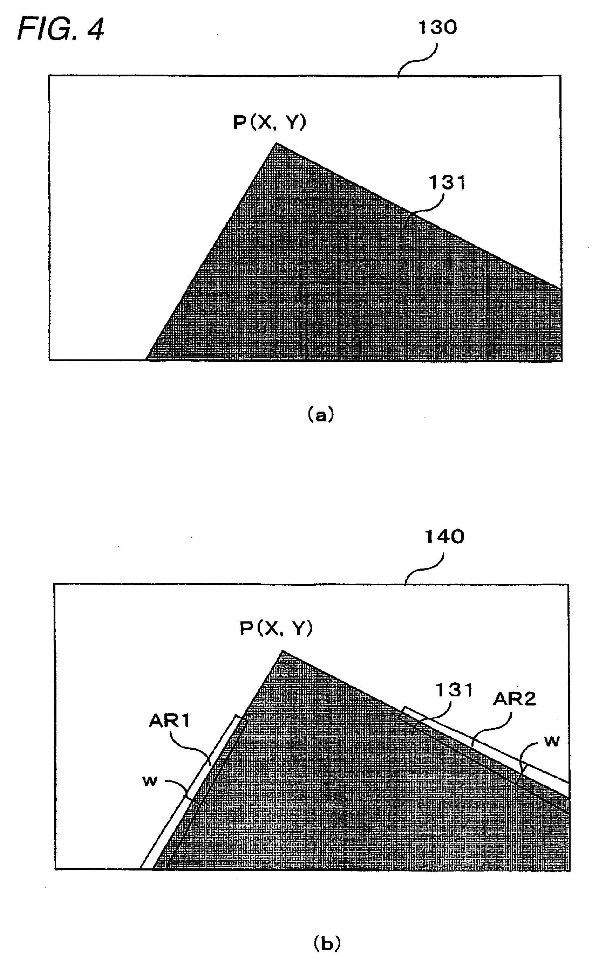

Also, the white-line sensing portion 16 extracts a low-frequency component from the video signal 1h representing an image 100 (see FIG.2) captured by the capturing portion 12, and generates a road surface image 130 containing a road surface 131, as shown in FIG.4(a). Further, the white-line sensing portion 16 generates an area image 140 (see FIG.4(b)) having areas AR1 and AR2, which have a width w inward and outward from both outer edges of the road surface 131 respectively, from the road surface image 130 generated in this manner.

Also, the white-line sensing portion 16 decides whether or not the edges r1 and r3 contained in the extracted edge image 120 (see FIG.3(b)) are fitted into the areas AR1 and AR2 (see FIG.4(b)) respectively. If the white-line sensing portion 16 decides that the edges are fitted into the areas respectively, it regards the lanes R1 and R3 as the white line and then outputs an extracted edge signal 6h showing the edges r1 and r3. Here, the detailed contents of the white line sensing is set forth in JP-A-2001-273504 and JP-A-2003-154900, for example.

When the position-in-the-traveling-direction sensing portion 17 received the extracted edge signal 6h generated by the white-line sensing portion 16, it derives straight lines representing the edges r1 and r3 themselves or their approximate straight lines, if the edges r1 and r3 are curves, by using the least squares method or the Hough transformation. Then, the position-in-the-traveling-direction sensing portion 17 calculates a position P (X,Y) of the vanishing point composed of an intersection point of these straight lines r1 and r3. Then, the position-in-the-traveling-direction sensing portion 17 sends the vanishing-point position information 4h showing the position P (X,Y) of the calculated vanishing point to the image composing portion 14 and the capturing direction controlling portion 18.

The capturing direction controlling portion 18 decides whether or not the position P of the vanishing point is below a predetermined height from a base of the composite image displayed on the displaying portion 15, based on the vanishing-point position information 4h received from the position-in-the-traveling-direction sensing portion 17. Then, if it is decided that the position P is below a predetermined height, the capturing direction controlling portion 18 sends position control information 7h to the driving portion 19 to shift the position P to a height higher than at least a predetermined height. Here, such capturing direction controlling portion 18 constitutes a position deciding portion and a control information outputting portion.

The driving portion 19 includes a servomotor to change the capturing direction of the capturing portion 12, and turns the servomotor in a positive direction or an opposite direction by an amount indicated by the position control information 7h fed from the capturing direction controlling portion 18. Accordingly, the driving portion 19 changes the capturing direction of the capturing portion 12 such that the position P is shifted to a predetermined height or more.

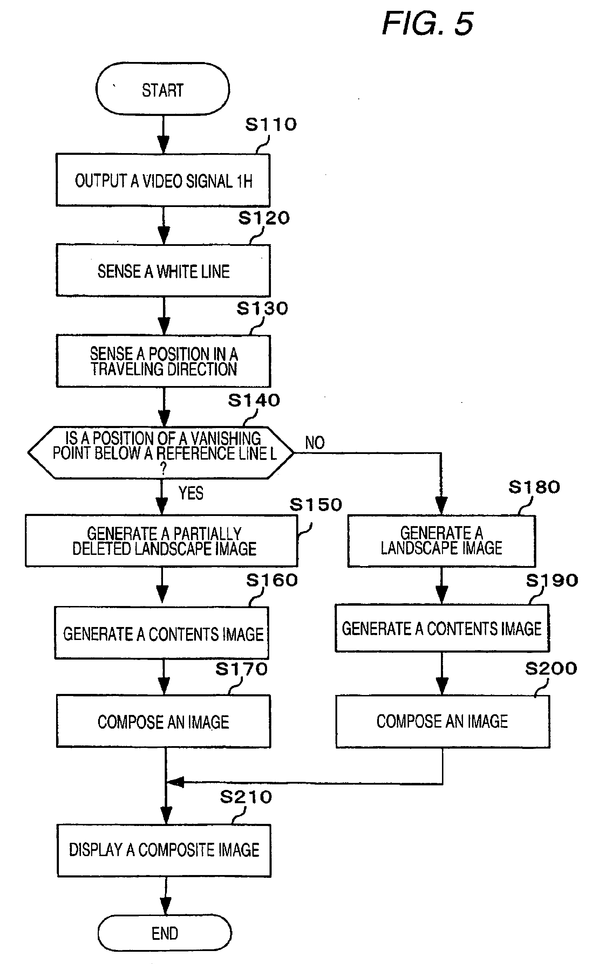

Next, operations of the above entertainment system 600 required until the image is displayed on the displaying portion 15 will be explained with reference to a flowchart in FIG.5 hereunder.

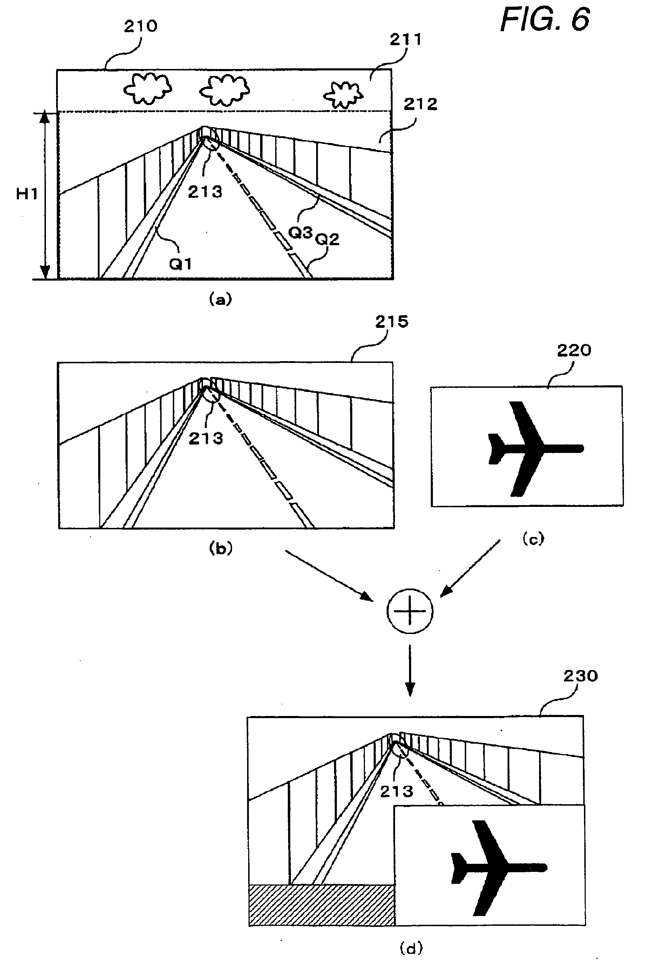

The landscape in the traveling direction of the vehicle (see FIG.6(a)) is shot by the capturing portion 12, and the white-line sensing portion 16 and the image composing portion 14 receives the resultant video signal 1 h (step S110).

The white-line sensing portion 16 generates the extracted edge signal 6h showing the edges r1 and r3 from the video signal 1h, as described above, and gives this signal to the position- in-the-traveling-direction sensing portion 17 (step S120).

When the position-in-the-traveling-direction sensing portion 17 received the extracted edge signal 6h from the white-line sensing portion 16, it calculates the position P (X,Y) of the vanishing point at which the edges r1 and r3 intersect with each other, based on the extracted edge signal 6h received, as described above. The position-in-the- traveling-direction sensing portion 17 gives the vanishing- point signal 4h indicating the calculated vanishing point P (X,Y) to the image composing portion 14 and the capturing direction controlling portion 18 (step S130).

The image composing portion 14 acquires the position P of the vanishing point indicated by the vanishing-point signal 4h from the position-in-the-traveling-direction sensing portion 17. Then, the image composing portion 14 decides whether or not the position P of the vanishing point is located below a height H1 from a base of the display screen on the displaying portion 15 (step S140). Here, a height H1 is a distance from a base of the display screen to an upper side of a contents image 220 described later. If it is decided as YES in step S140, the image composing portion 14 combines vanishing- point position information 213 (encircled with ο in FIG.6), which shows the vanishing point by a figure in a predetermined shape, with a location that corresponds to the position P of the vanishing point in a landscape image 210 shown in FIG.6(a), then picks up a portion 212 located below a height H1 from the landscape image 210, and thus generates an intermediate composite image 215 shown in FIG.6(b)(step S150). In other words, the image composing portion 14 cuts an empty portion 211 from the landscape image 210. Here, the image composing portion 14 constitutes a position deciding portion and an excluding portion.

Then, the image composing portion 14 generate the contents image 220 illustrated in FIG.6(c) by using the contents information 3h given by the video contents playing portion 11 (step S160). Then, the image composing portion 14 generates the composite image signal 5h representing the image in which the contents image 220 and the intermediate composite image 215 are composed together (see FIG.6(d)) such that the vanishing- point position information 213 composed in the intermediate composite image 215 is not hidden by the contents image 220 (step S170). Such composite image signal 5h is given to the displaying portion 15.

When the image composing portion 14 decided NO in step S140, it generates an intermediate landscape image 310 (see FIG.7(a)) in which vanishing-point position information is arranged at the location, which corresponds to the position P in the intermediate composite image 215, to indicate the position P of the vanishing point that is indicated by the vanishing-point signal 4h received from the position-in-the- traveling-direction sensing portion 17 (step S180).

Then, the image composing portion 14 generates a contents image 320 (see FIG.7) from the contents information 3h obtained from the video contents playing portion 11 (step S190). Then, the image composing portion 14 generates a composite image 330 illustrated in FIG.7, in which the contents image 320 and the landscape image 310 are combined together such that vanishing- point position information 311 in the landscape image 310 is not covered with the contents image 320 (step S200). The image composing portion 14 outputs this image to the displaying portion 15 as an example of the composite image signal 5h representing the composite image 330.

When the composite image signal 5h is given from the image composing portion 14, the displaying portion 15 displays the composite image based on the input signal 5h (step S210). Then, the process is ended.

Next, an image displaying operation of the entertainment system 600 when the operation signal 2h indicating the traveling direction of the vehicle is given from the winker portion 13 will be explained hereunder.

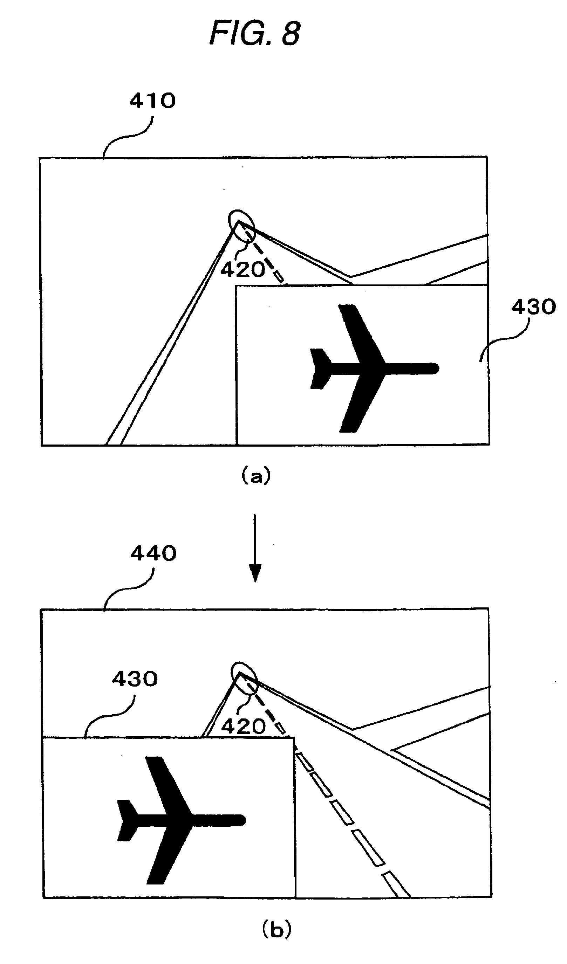

When the winker portion 13 gives the operation signal 2h indicating that the vehicle steers its traveling direction rightward, for example, to the image composing portion 14, the image composing portion 14 generates a composite image 440 in which a contents image 430 arranged in a lower right portion of a composite image 410 illustrated in FIG.8 is arranged in a position that is in a lower left portion and does not cover vanishing-point position information 420, as illustrated in FIG.8. According to this operation, both the vanishing- point position information 420 and the right turning road to which the vehicle should turn are displayed on the displaying portion 15.

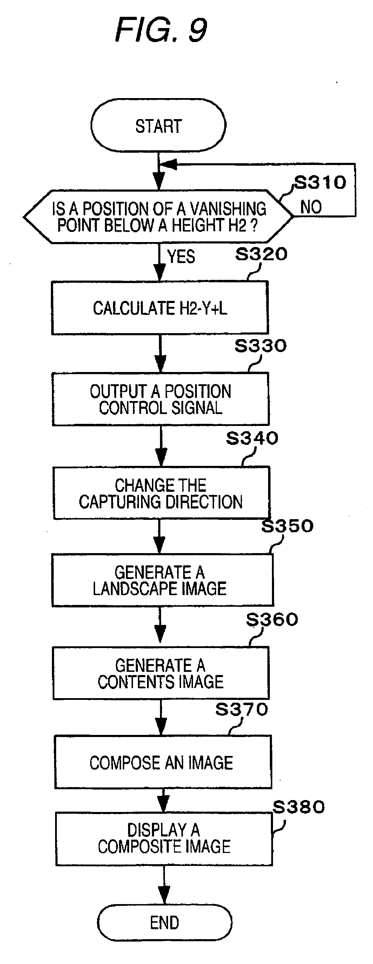

Next, an operation for controlling the capturing direction of the capturing portion 12 in the entertainment system 600 will be explained with reference to a flowchart shown in FIG.9 hereunder.

When the vanishing-point signal 4h indicating the position P of the vanishing point is given by the position-in- the-traveling-direction sensing portion 17, the capturing direction controlling portion 18 decides whether or not the position P of the vanishing point is positioned below a height H2 from a base of the screen (step S310). Here, this height H2 is a distance from a base of the display screen to an upper side of the contents image 220 described later.

When the capturing direction controlling portion 18 decided that the position P of the vanishing point is positioned over the height H2 (step S310; NO), it continues to execute this process until the position P of the vanishing point is below the height H2. In contrast, when the capturing direction controlling portion 18 decided that the position P is below the height H2 on the screen (step S310; YES), it calculates T (T=H2-Y+L) by subtracting a height Y of the position P from the height H2 (H2-Y) and then adding a value L to the value H2-Y to give a slim margin (step S320).

Then, the capturing direction controlling portion 18 output the position control signal 7h, which controls the camera direction that is calculated based on the value T such that the position P of the vanishing point is over the height H2, to the driving portion 19 (step S330).

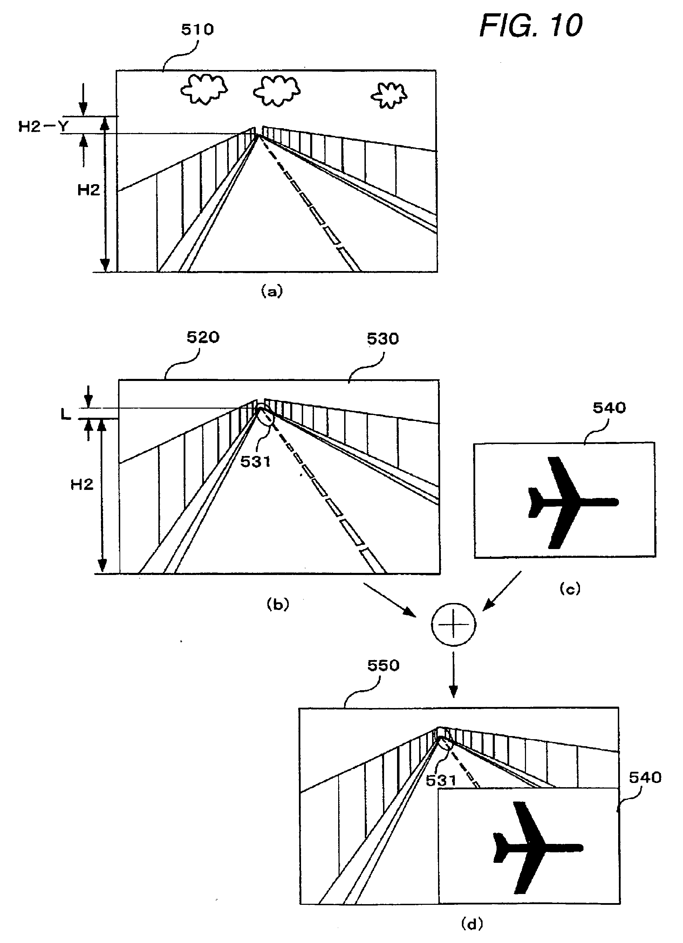

The driving portion 19 makes predetermined turns in the direction in accordance with the position control signal 7h given by the capturing direction controlling portion 18, and changes the capturing direction of the capturing portion 12 (step S340). Then, the capturing portion 12 outputs the video signal 1h of a landscape image 520 illustrated in FIG.10(b), in which the position P of the vanishing point is shifted to (H2+L) from a landscape image 510 illustrated in FIG.10(a) before the change, to the image composing portion 14.

The image composing portion 14 calculates the position P of the vanishing point from the vanishing-point signal 4h given by the position-in-the-traveling-direction sensing portion 17, and then generates a landscape image 530 illustrated in FIG.10(b), in which vanishing-point position information 531 indicating the position of the vanishing point is displayed at the location of the position P of the vanishing point in the landscape image 510 (step S350). Then, the image composing portion 14 generates a contents image 540 illustrated in FIG.10(c) by using the contents information 3h given by the video contents playing portion 11 (step S360).

Then, the image composing portion 14 generates a composite image 550 illustrated in FIG.10(d), in which the contents image 540 and the landscape image 530 are synthesized such that the vanishing-point position information 531 in the landscape image 530 is not covered with the contents image 540 (step S370). Then, the image composing portion 14 feeds the composite image signal 5h representing the composite image 550 to the displaying portion 15. Then, the displaying portion 15 displays the received composite image 550 (step S380). Then, the process is ended.

According to the entertainment system 600 of this embodiment, the landscape image sensed by the position-in-the- traveling-direction sensing portion 17 and displaying the position on the traveling direction of the vehicle is generated on the landscape image captured by the capturing portion 12, the contents image is generated from the contents information output by the video contents playing portion 11, and the image composing portion 14 synthesizes the contents image and the landscape image such that the position on the traveling direction of the vehicle in the landscape image is not covered with the contents image. Therefore, even when the winker is not used, the turning of the vehicle can be foreseen by the passenger, so that the viewer can assume a posture of safety in advance and the occurrence of motion sickness in the viewer can be prevented.

In the above embodiment, as preferable embodiment, such a mode is explained that the vanishing-point position information 213 is combined with the landscape image 210 and then the contents image 220 and the intermediate composite image 215 are combined such that the composed vanishing-point position information 213 is not hidden by the contents image 220. But the present invention is not limited to this mode. The vanishing-point position information 213 may not be combined with the landscape image 210, but simply the contents image 220 may be combined with the neighborhood of the position specified by the vanishing-point position information 213 in step S170. In other words, the image composing portion 14 may synthesize the contents image and the landscape image such that the position on the traveling direction of the vehicle in the landscape image is not covered with the contents image. Here, the wording "the position on the traveling direction of the vehicle in the landscape image is not covered with the contents image" means a state "the contents image is arranged on the surroundings of the position (position information) on the traveling direction of the vehicle". This state "the contents image is arranged on the surroundings of the position (position information) on the traveling direction of the vehicle" means a common state "the contents image is also arranged on the displaying portion 15 while the display of the position on the traveling direction of the vehicle is being maintained on the displaying portion 15". Therefore, the wording "the contents image is arranged on the surroundings of the position information" is not limited only to the case where the contents image is arranged in close vicinity of the position on the traveling direction of the vehicle, and contains such a state that the contents image is arranged to be displaced slightly from that position.

Also, according to the entertainment system 600, the contents image and the landscape image are synthesized such that the position on the traveling direction of the vehicle in the landscape image is not covered with the position information shown in the operation information on the opposite side to the turning direction of the vehicle. Therefore, this system can inform the fellow passenger of the turning direction of the vehicle.

Also, according to the entertainment system 600, a predetermined upper portion or a predetermined lower portion is excluded from the captured landscape image, and then the composite image is generated by the image composing portion 14 using the remaining landscape image. Therefore, this system can shift the landscape image out of the composite image displayed on the displaying portion.

Also, according to the entertainment system 600, the capturing direction controlling portion 18 outputs the control information to the capturing portion 12 to change the capturing direction of the capturing portion 12 such that the position on the traveling direction of the vehicle sensed by the position-in-the-traveling-direction sensing portion 17 is displayed on the composite image generated by the image composing portion 14. Therefore, the position on the traveling direction of the vehicle can always be displayed on the landscape image out of the displayed composite image.

Also, according to the entertainment system 600, the position-in-the-traveling-direction sensing portion 17 senses the vanishing point sensed by the white-line sensing portion 16 as the intersection point between the white lines depicted on the road surface as the position on the traveling direction of the vehicle. Therefore, the position on the traveling direction of the vehicle can be specified simply.

Here, when the entertainment system 600 is provided to the rear sheet in the second row et seq., the rear seat entertainment system can be implemented. In this case, the monitor constituting the displaying portion 15 is provided to the rear side of the seat that is provided in front of the rear seat, or the like. Since particularly the passenger seated on the rear seat cannot often know the traveling direction, the present invention is particularly useful to the implementation of the rear seat entertainment system.

In this case, the system may be controlled in such a manner that curvature information of the road and information of right and left turning roads at an intersection are acquired from the navigation system provided to the vehicle and then the image of the traveling road is always displayed on the displaying portion 15 in view of a route to a previously set destination.

Further, the present invention contains the entertainment providing method. This method (1) generates the landscape image by capturing the landscape on the traveling direction of the vehicle, (2) outputs the contents information containing the image information, (3) senses the position on the traveling direction of the vehicle from the captured landscape image, (4) generates the contents image from the output contents information, and then generates the composite image by combining the contents image with the landscape image such that the contents image is arranged on the surrounding of the sensed position in the landscape image, and (5) displays the composite image.

Also, the program for causing a computer to execute respective steps described above is also contained in the present invention. This program is incorporated into the inside or outside of the system in various formats. For example, the program may be recorded in a predetermined memory in the system. Also, the program may be recorded in an information recording device such as a hard disk, or the like, or an information recording medium such as CD-ROM, DVD-ROM, memory card, or the like.

In the above embodiment, the position on the traveling direction of the vehicle is the vanishing point of the road sensed by the white lines on the road surface. However, not only the method of sensing the white line but also any method of sensing a convergence point of parallel straight lines on the image can be used as the way of sensing the vanishing point. For example, the vanishing point can be sensed by using a group of straight lines constructed by walls of the buildings. In addition, the position on the traveling direction of the vehicle can be sensed by not the vanishing point but other information.

Also, in FIG.9, the camera direction is controlled when the position of the vanishing point is below the height H2. But the camera direction may be controlled such that the position P of the vanishing point is set to the height H2 when the position of the vanishing point is over the height H2.

Also, the type of the contents information of the present invention is not limited if such contents information contains the image information that can be combined with the landscape image.

### Industrial Applicability

The entertainment system according to the present invention is useful to a rear seat entertainment system that makes it possible for the fellow passenger to foresee an extreme behavior of the vehicle when the vehicle exhibits the extreme behavior to some extent, e.g., when the vehicle turns, so that the viewer can assume a posture of safety in advance and the occurrence of motion sickness in the viewer can be prevented, and the like.

## Claims

1. An entertainment system, comprising:
a capturing portion (12) that generates a landscape image by capturing a landscape on a travelling direction of a vehicle;
a video contents playing portion (11) that outputs video contents containing image information;
a position-in-a-travelling-direction sensing portion (17) that senses a position in the travelling direction of the vehicle based on the landscape image generated by the capturing portion (12) and that generates a sensed position indicative of the travelling direction of the vehicle;
a first composite image generating portion (14) that generates an intermediate image by combining the landscape image with the sensed position, generates a video contents image from the video contents output by the video contents playing portion (11), and then generates a composite image by combining the video contents image with the intermediate image so that the sensed position is not covered with the video contents image in the composite image so that the video contents image is arranged on surroundings of the sensed position in the composite image ; and
a displaying portion (15) that displays the composite image generated by the first composite image generating portion (14).

2. The entertainment system according to claim 1, wherein the first composite image generating portion generates an intermediate image in which a figure information representing a predetermined shape is combined in a position sensed by the position-in-the-traveling-direction sensing portion in the landscape image generated by the capturing portion, and generates the composite image by combining the contents image with the intermediate image so that the contents image is arranged on surroundings of the figure information in the intermediate image.

3. The entertainment system according to claim 1, further comprising:
a white-line sensing portion that senses white lines depicted on a road surface based on the landscape image generated by the capturing portion,
wherein the position-in-the-traveling-direction sensing portion senses a vanishing point which indicates an intersection of the white lines sensed by the white-line sensing portion as the position on the traveling direction of the vehicle.

4. The entertainment system according to claim 3, further comprising:
an operation information outputting portion that outputs operation information indicating a turning direction of the vehicle; and
a second composite image generating portion that generates an intermediate image in which position information indicating the position sensed by the position-in-the-traveling-direction sensing portion is combined with the landscape image generated by the capturing portion and a contents image from the contents information being output from the contents information outputting portion in the landscape image generated by the capturing portion when the operation information is given by the operation information outputting portion, and generates the composite image in which the contents image is combined with the intermediate image so that the contents image is arranged in a position on an opposite side to the turning direction of the vehicle indicated by the operation information and on surroundings of the position information in the intermediate image,
wherein the displaying portion displays the composite image generated by the second composite image generating portion.

5. The entertainment system according to claim 3, further comprising:
a position deciding portion that decides whether the position sensed by the position-in-the-traveling-direction sensing portion is below or over a predetermined height from a base of the composite image displayed on the displaying portion;
an excluding portion that excludes an upper portion of the landscape image captured by the capturing portion by an amount by which the position displayed in a display image on the displaying portion is shifted to the predetermined height or more when it is decided by the position deciding portion that the position is below the predetermined height; and
a third composite image generating portion that generates an intermediate image in which position information indicating the position sensed by the position-in-the-traveling-direction sensing portion is combined with a remaining landscape image not to be excluded by the excluding portion and a contents image from contents information being output by the contents information outputting portion, and generates a composite image by combining the intermediate image with the contents image so that the contents image is arranged on surroundings of the position information in the intermediate image,
wherein the displaying portion displays the composite image generated by the third composite image generating portion.

6. The entertainment system according to claim 3, further comprising:
a driving portion that changes the capturing direction of the capturing portion;
a position deciding portion that decides whether the position sensed by the position-in-the-traveling-direction sensing portion is below or over a predetermined height from a base of the composite image displayed on the displaying portion; and
a control information outputting portion that outputs control information, which causes the position displayed in a display image on the displaying portion to shift to the predetermined height or more, to the driving portion when it is decided by the position deciding portion that the position is below the predetermined height,
wherein the driving portion changes the capturing direction of the capturing portion based on the control information being output by the control information outputting portion.

7. An entertainment providing method comprising:
generating a landscape image by capturing a landscape on a traveling direction of a vehicle;
outputting video contents information containing image information;
sensing a position in the traveling direction of the vehicle based on the captured landscape image;
generating a sensed position indicative of the travelling direction of the vehicle;
generating a video contents image based on the output video contents information, and generating a composite image by generating an intermediate image by combining the landscape image with the sensed position and then by combining the video contents image with the intermediate image so that the video contents image is arranged on surroundings of the sensed position in the composite image whereby the sensed position is not covered with the video content image in the composite image ; and
displaying the composite image.

## Patentansprüche

1. Unterhaltungssystem mit:
einer Aufnahme-Einheit (12), die ein Landschaftsbild **dadurch** erzeugt, dass sie eine Landschaft in einer Fahrtrichtung eines Fahrzeugs aufnimmt;
einer Video-Inhalts-Wiedergabeeinheit (11), die einen Video-Inhalt ausgibt, der Bildinformationen enthält;
einer Position-in-Fahrtrichtung-Erfassungseinheit (17), die eine Position des Fahrzeugs in der Fahrtrichtung auf Grund des von der Aufnahme-Einheit (12) erzeugten Landschaftsbilds erfasst und eine erfasste Position erzeugt, die die Fahrtrichtung des Fahrzeugs angibt;
einer ersten Zusammengesetztes-Bild-Erzeugungseinheit (14), die durch Kombinieren des Landschaftsbilds mit der erfassten Position ein Zwischenbild erzeugt, aus dem von der Video-Inhalts-Wiedergabeeinheit (11) ausgegebenen Video-Inhalt ein Video-Inhaltsbild erzeugt und dann ein zusammengesetztes Bild **dadurch** erzeugt, dass sie das Video-Inhaltsbild so mit dem Zwischenbild kombiniert, dass die erfasste Position nicht von dem Video-Inhaltsbild in dem zusammengesetzten Bild überdeckt wird und dass das Video-Inhaltsbild in der Umgebung der erfassten Position in dem zusammengesetzten Bild angeordnet wird; und
einer Anzeige-Einheit (15), die das zusammengesetzte Bild anzeigt, das von der ersten Zusammengesetztes-Bild-Erzeugungseinheit (14) erzeugt worden ist.

2. Unterhaltungssystem nach Anspruch 1, **dadurch gekennzeichnet, dass** die erste Zusammengesetztes-Bild-Erzeugungseinheit ein Zwischenbild erzeugt, in dem Gestalt-Informationen, die eine festgelegte Gestalt darstellen, an einer Position zusammengefasst werden, die von der Position-in-Fahrtrichtung-Erfassungseinheit in dem von der Aufnahme-Einheit erzeugten Landschaftsbild erfasst worden ist, und dass sie das zusammengesetzte Bild **dadurch** erzeugt, dass sie das Inhaltsbild so mit dem Zwischenbild kombiniert, dass das Inhaltsbild in der Umgebung der Gestalt-Informationen in dem Zwischenbild angeordnet wird.

3. Unterhaltungssystem nach Anspruch 1, das weiterhin eine Weißer-Strich-Erfassungseinheit aufweist, die weiße Striche, die auf einer Straßen-Oberfläche aufgebracht sind, auf Grund des Landschaftsbilds erfasst, das von der Aufnahme-Einheit erzeugt worden ist, wobei die Position-in-Fahrtrichtung-Erfassungseinheit einen Verschwindungspunkt, der einen Schnittpunkt der von der Weißer-Strich-Erfassungseinheit erfassten weißen Striche darstellt, als die Position des Fahrzeugs in der Fahrtrichtung erfasst.

4. Unterhaltungssystem nach Anspruch 3, das weiterhin Folgendes aufweist:
eine Betriebsinformationen-Ausgabe-Einheit, die Betriebsinformationen ausgibt, die eine Wenderichtung des Fahrzeugs angeben; und
eine zweite Zusammengesetztes-Bild-Erzeugungseinheit, die Folgendes erzeugt:
ein Zwischenbild, in dem Positionsinformationen, die die von der Position-in-Fahrtrichtung-Erfassungseinheit erfasste Position angeben, mit dem von der Aufnahme-Einheit erzeugten Landschaftsbild und einem Inhaltsbild aus den von der Inhaltsinformationen-Ausgabe-Einheit ausgegebenen Inhaltsinformationen in dem Landschaftsbild kombiniert werden, das von der Aufnahme-Einheit erzeugt wird, wenn die Betriebsinformationen von der Betriebsinformationen-Ausgabe-Einheit ausgegeben werden, und
ein zusammengesetztes Bild, in dem das Inhaltsbild so mit dem Zwischenbild kombiniert wird, dass das Inhaltsbild an einer Position auf einer zu der Wenderichtung des Fahrzeugs, die von den Betriebsinformationen angegeben wird, entgegengesetzten Seite und in der Umgebung der Positionsinformationen in dem Zwischenbild angeordnet wird,
wobei die Anzeige-Einheit das zusammengesetzte Bild anzeigt, das von der zweiten Zusammengesetztes-Bild-Erzeugungseinheit erzeugt worden ist.

5. Unterhaltungssystem nach Anspruch 3, das weiterhin Folgendes aufweist:
eine Positionsermittlungseinheit, die ermittelt, ob sich die von der Position-in-Fahrtrichtung-Erfassungseinheit erfasste Position unterhalb oder oberhalb einer festgelegten Höhe von einer Grundlinie des zusammengesetzten Bilds befindet, das an der Anzeige-Einheit angezeigt wird;
eine Ausschließeinheit, die einen oberen Teil des von der Aufnahme-Einheit aufgenommenen Landschaftsbilds um einen Betrag ausschließt, um den die Position, die in einem Anzeigebild an der Anzeige-Einheit angezeigt wird, zu der festgelegten Höhe oder darüber hinaus verschoben wird, wenn von der Positionsermittlungseinheit ermittelt wird, dass sich die Position unterhalb der festgelegten Höhe befindet; und
eine dritte Zusammengesetztes-Bild-Erzeugungseinheit, die ein Zwischenbild erzeugt, in dem Positionsinformationen, die die von der Position-in-Fahrtrichtung-Erfassungseinheit erfasste Position angeben, mit einem verbleibenden Landschaftsbild, das nicht von der Ausschließeinheit ausgeschlossen werden soll, und einem Inhaltsbild aus von der Inhaltsinformationen-Ausgabe-Einheit ausgegebenen Inhaltsinformationen kombiniert werden, und die ein zusammengesetztes Bild **dadurch** erzeugt, dass sie das Zwischenbild so mit dem Inhaltsbild kombiniert, dass das Inhaltsbild in der Umgebung der Positionsinformationen in dem Zwischenbild angeordnet wird,
wobei die Anzeige-Einheit das zusammengesetzte Bild anzeigt, das von der dritten Zusammengesetztes-Bild-Erzeugungseinheit erzeugt worden ist.

6. Unterhaltungssystem nach Anspruch 3, das weiterhin Folgendes aufweist:
eine Ansteuer-Einheit, die die Aufnahmerichtung der Aufnahme-Einheit ändert;
eine Positionsermittlungseinheit, die ermittelt, ob sich die von der Position-in-Fahrtrichtung-Erfassungseinheit erfasste Position unterhalb oder oberhalb einer festgelegten Höhe von einer Grundlinie des zusammengesetzten Bilds befindet, das an der Anzeige-Einheit angezeigt wird; und
eine Steuerinformationen-Ausgabe-Einheit, die Steuerinformationen, die veranlassen, dass die Position, die in einem Anzeigebild an der Anzeige-Einheit angezeigt wird, zu der festgelegten Höhe oder darüber hinaus verschoben wird, an die Ansteuer-Einheit ausgibt, wenn von der Positionsermittlungseinheit ermittelt wird, dass sich die Position unterhalb der festgelegten Höhe befindet,
wobei die Ansteuer-Einheit die Aufnahmerichtung der Aufnahme-Einheit auf Grund der von der Steuerinformationen-Ausgabe-Einheit ausgegebenen Steuerinformationen ändert.

7. Unterhaltungsbereitstellungsverfahren mit den folgenden Schritten:
Erzeugen eines Landschaftsbilds durch Aufnehmen einer Landschaft in einer Fahrtrichtung eines Fahrzeugs;
Ausgeben von Video-Inhaltsinformationen, die Bildinformationen enthalten;
Erfassen einer Position des Fahrzeugs in der Fahrtrichtung auf Grund des aufgenommenen Landschaftsbilds;
Erzeugen einer erfassten Position, die die Fahrtrichtung des Fahrzeugs angibt;
Erzeugen eines Video-Inhaltsbilds auf Grund der ausgegebenen Video-Inhaltsinformationen und Erzeugen eines zusammengesetzten Bilds durch Erzeugen eines Zwischenbilds durch Kombinieren des Landschaftsbilds mit der erfassten Position und anschließend durch Kombinieren des Video-Inhaltsbilds mit dem Zwischenbild in einer Weise, dass das Video-Inhaltsbild so in der Umgebung der erfassten Position in dem zusammengesetzten Bild angeordnet wird, dass die erfasste Position nicht von dem Video-Inhaltsbild in dem zusammengesetzten Bild überdeckt wird; und
Anzeigen des zusammengesetzten Bilds.

## Revendications

1. Système de divertissement, comprenant :
une partie de capture (12) qui génère une image de paysage en capturant un paysage sur une direction de déplacement d'un véhicule ;
une partie (11) de lecture de contenus vidéo qui délivre en sortie des contenus vidéo contenant des informations d'image ;
une partie (17) de détection d'une position dans une direction de déplacement qui détecte une position dans la direction de déplacement du véhicule sur la base de l'image de paysage générée par la partie de capture (12) et qui génère une position détectée indiquant la direction de déplacement du véhicule ;
une première partie (14) de génération d'image composite qui génère une image intermédiaire en combinant l'image de paysage avec la position détectée, qui génère une image de contenus vidéo à partir des contenus vidéos délivrés en sortie par la partie (11) de lecture de contenus vidéo, et qui génère par la suite une image composite en combinant l'image de contenus vidéo avec l'image intermédiaire de sorte que la position détectée ne soit pas couverte de l'image de contenus vidéo dans l'image composite, de sorte que l'image de contenus vidéo soit agencée aux alentours de la position détectée dans l'image composite ; et
une partie d'affichage (15) qui affiche l'image composite générée par la première partie (14) de génération d'image composite.

2. Système de divertissement selon la revendication 1, dans lequel la première partie de génération d'image composite génère une image intermédiaire dans laquelle des informations de figure représentant une forme prédéterminée sont combinées dans une position détectée par la partie de détection de la position dans la direction de déplacement dans l'image de paysage générée par la partie de capture, et génère l'image composite en combinant l'image de contenus avec l'image intermédiaire de sorte que l'image de contenus soit agencée au alentours des information de figure dans l'image intermédiaire.

3. Système de divertissement selon la revendication 1, comprenant en outre :
une partie de détection de ligne blanche qui détecte des lignes blanches représentées sur une surface de roulement sur la base de l'image de paysage générée par la partie de capture,
où la partie de détection de la position dans la direction de déplacement détecte un point de fuite qui indique une intersection des lignes blanches détectées par la partie de détection de ligne blanche comme étant la position sur la direction de déplacement du véhicule.

4. Système de divertissement selon la revendication 3, comprenant en outre :
une partie de sortie d'informations d'opération qui délivre en sortie des informations d'opération indiquant une direction de virage du véhicule ; et
une deuxième partie de génération d'image composite qui génère une image intermédiaire dans laquelle des informations de position indiquant la position détectée par la partie de détection de la position dans la direction de déplacement est combinée avec l'image de paysage générée par la partie de capture et une image de contenus provenant des informations de contenus qui sont délivrées en sortie par la partie de sortie d'informations de contenus dans l'image de paysage générée par la partie de capture lorsque les informations d'opération sont déterminées par la partie de sortie des informations d'opération, et génère l'image composite dans laquelle l'image de contenus est combinée avec l'image intermédiaire de sorte que l'image de contenus soit agencée dans une position sur un côté opposé à la direction de virage du véhicule indiquée par les informations d'opération et aux alentours des informations de position dans l'image intermédiaire,
où la partie d'affichage affiche l'image composite générée par la deuxième partie de génération d'image composite.

5. Système de divertissement selon la revendication 3 comprenant en outre :
une partie décidant de la position qui décide si la position détectée par la partie de détection de la position dans la direction de déplacement se trouve au-dessous ou au-dessus d'une hauteur prédéterminée à partir d'une base de l'image composite affichée sur la partie d'affichage ;
une partie d'exclusion qui exclut une partie supérieure de l'image de paysage capturée par la partie de capture d'une quantité par laquelle la position affichée dans une image d'affichage sur la partie d'affichage est décalée à la hauteur prédéterminée ou plus lorsque la partie décidant de la position décide que la position est au-dessous de la hauteur prédéterminée ; et
une troisième partie de génération d'image composite qui génère une image intermédiaire dans laquelle des informations de position indiquant la position détectée par la partie de détection de la position dans la direction de déplacement est combinée avec une image de paysage restante à ne pas exclure par la partie d'exclusion et une image de contenus provenant des informations de contenus qui sont délivrées en sortie par la partie de sortie d'informations de contenus, et génère une image composite en combinant l'image intermédiaire avec l'image de contenus de sorte que l'image de contenus soit agencée aux alentours des informations de position dans l'image intermédiaire,
où la partie d'affichage affiche l'image composite générée par la troisième partie de génération d'image composite.

6. Système de divertissement selon la revendication 3 comprenant en outre :
une partie d'entraînement qui change la direction de capture de la partie de capture ;
une partie décidant de la position qui décide si la position détectée par la partie de détection de la position dans la direction de déplacement est au-dessous ou au-dessus d'une hauteur prédéterminée à partir d'une base de l'image composite affichée sur la partie d'affichage ; et
une partie de sortie d'informations de commande qui délivre en sortie des informations de commande, qui amène la position affichée dans une image d'affichage sur la partie d'affichage à être décalée à la hauteur prédéterminée ou plus, à la portion d'entraînement lorsque la partie décidant de la position décide que la position est au-dessous de la hauteur prédéterminée,
où la partie d'entraînement change la direction de capture de la partie de capture sur la base des informations de commande qui sont délivrées en sortie par la partie de sortie d'informations de commande.

7. Procédé fournissant un divertissement comprenant le fait :
de générer une image de paysage en capturant un paysage sur une direction de déplacement d'un véhicule ;
de délivrer en sortie des informations de contenus vidéo contenant des informations d'image ;
de détecter une position dans la direction de déplacement du véhicule sur la base de l'image de paysage capturée ;
de générer une position détectée indiquant la direction de déplacement du véhicule ;
de générer une image de contenus vidéo sur la base des informations de contenus vidéo délivrées en sortie, et de générer une image composite en générant une image intermédiaire par la combinaison de l'image de paysage avec la position détectée, et par la combinaison ensuite de l'image de contenus vidéo avec l'image intermédiaire de sorte que l'image de contenus vidéo soit agencée aux alentours de la position détectée dans l'image composite, grâce à quoi la position détectée n'est pas couverte de l'image de contenus vidéo dans l'image composite ; et
d'afficher l'image composite.
